(19) **Europäisches Patentamt**
**European Patent Office**
**Office européen des brevets**

(11) **EP 3 890 005 B1**

(12) **FASCICULE DE BREVET EUROPEEN**

(45) Date de publication et mention
de la délivrance du brevet:
**23.11.2022 Bulletin 2022/47**

(21) Numéro de dépôt: **21165584.0**

(22) Date de dépôt: **29.03.2021**

(51) Classification Internationale des Brevets (IPC):
*H01L 23/00* (2006.01)    *H01L 23/58* (2006.01)
*H01L 25/00* (2006.01)    *H01L 21/768* (2006.01)
*H01L 23/528* (2006.01)   *G03F 1/00* (2012.01)
*G06F 21/73* (2013.01)    *H04L 9/32* (2006.01)

(52) Classification Coopérative des Brevets (CPC):
**H01L 23/573; G06F 21/73; H01L 21/76816;**
**H01L 23/528; H01L 23/576; H04L 9/3278;**
H01L 23/585; H01L 25/50; H04L 2209/12

(54) **PROCÉDÉ DE RÉALISATION SUR UNE PLAQUE D'UNE PLURALITÉ DE PUCES COMPRENANT CHACUNE UNE ZONE D'INDIVIDUALISATION**

VERFAHREN ZUR HERSTELLUNG EINER VIELZAHL VON CHIPS AUF EINER PLATTE, DIE JEWEILS EINE INDIVIDUALISIERUNGSZONE AUFWEISEN

METHOD FOR PRODUCING ON A PLATE A PLURALITY OF CHIPS, EACH COMPRISING AN INDIVIDUALISATION AREA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.03.2020 FR 2003111**

(43) Date de publication de la demande:
**06.10.2021 Bulletin 2021/40**

(73) Titulaire: **Commissariat à l'énergie atomique et aux énergies alternatives**
**75015 Paris (FR)**

(72) Inventeurs:
• **LANDIS, Stefan**
  **38054 GRENOBLE (FR)**
• **MAY, Michaël**
  **38054 GRENOBLE (FR)**

(74) Mandataire: **Hautier IP**
**20, rue de la Liberté**
**06000 Nice (FR)**

(56) Documents cités:
**EP-A1- 3 418 936    FR-A1- 2 978 613**
**US-A1- 2002 096 777**

**Description**

**DOMAINE TECHNIQUE**

La présente invention concerne l'individualisation des puces comprenant des circuits intégrés. Elle trouve pour application particulièrement avantageuse la protection de ces puces ainsi que la protection des composants ou des dispositifs intégrant ces puces.

**ETAT DE LA TECHNIQUE**

La conception et la fabrication de puces uniques représente un enjeu considérable, tout particulièrement pour des problématiques de sécurité.

Par exemple, pour lutter contre la contrefaçon, on cherche à trouver des solutions qui permettent d'authentifier un circuit afin de pouvoir discriminer s'il s'agit d'un circuit légitime (authentification réussie) ou d'un circuit contrefait (authentification échouée). Une des solutions consiste à fabriquer un circuit qui présente une conception unique. Cette individualisation de conception est naturellement contradictoire avec le principe général de l'industrie microélectronique qui consiste à produire en masse des composants tous identiques avec une très faible disparité entre eux.

Des solutions ont été proposées pour identifier de manière unique un circuit intégré sans avoir à concevoir de manière unique chaque circuit intégré.

Par exemple, des solutions visent à utiliser les dispersions fonctionnelles inhérentes aux circuits intégrés. Les résistances des lignes d'interconnexion métallique ou des vias diffèrent d'un circuit à l'autre, ce qui induit des chutes de tension le long du chemin emprunté par le signal électrique. Le temps de réponse des signaux diffère donc du fait de la variabilité induite sur les temps de propagation des signaux aux limites des contraintes électroniques du circuit, ou encore du fait de l'instabilité au démarrage des composants comme par exemple les mémoires SRAMS (acronyme de Static Random Access Memory signifiant mémoire vive statique) qui présentent un état unique à chaque démarrage.

Toutefois, ces solutions sont très sensibles aux variations environnementales ou au vieillissement. En particulier, des changements de températures, de tensions d'alimentation ou des interférences électromagnétiques peuvent affecter les performances de ces solutions en diminuant leur robustesse. Ainsi, les temps de réponse d'un circuit intégré peuvent évoluer dans le temps. Il en résulte qu'un circuit légitime peut éventuellement être déclaré comme étant contrefait.

Le document EP3418936 décrit un procédé d'individualisation d'une puce. Cette solution s'avère complexe et longue à mettre en œuvre. Elle induit un cout de revient élevé.

Il existe donc un besoin consistant à limiter, voire à résoudre, les problématiques des solutions connues.

**RESUME**

Pour atteindre cet objectif, selon un mode de réalisation on prévoit un procédé de réalisation sur une plaque d'une pluralité de puces comprenant chacune une zone d'individualisation selon la revendication 1. Chaque puce est destinée à comprendre au moins :

- un premier et un deuxième niveaux des pistes électriques,
- un niveau d'interconnexions situées entre les premiers et deuxième niveaux des pistes électriques et comportant des vias destinés à connecter électriquement des pistes électriques du premier niveau avec des pistes électriques du deuxième niveau.

Le procédé comprend au moins les étapes suivantes effectuées de préférence simultanément pour une pluralité de puces de la plaque:

- fournir au moins le premier niveau des pistes électriques et une couche diélectrique recouvrant le premier niveau,
- réaliser sur la couche diélectrique un masque, de préférence un masque dur, présentant des ouvertures situées au droit des pistes électriques et rendant accessible la couche diélectrique,
- réaliser, dans une zone de la puce destinée à comprendre la zone d'individualisation, des motifs conformés pour que :

  ◦ des premières ouvertures du masque soient non masquées par les motifs de sorte à laisser la couche diélectrique accessible au droit des premières ouvertures et que
  ◦ des deuxièmes ouvertures du masque soient masquées par les motifs.

- réaliser des ouvertures, dites ouvertures de vias, dans la couche diélectrique au droit seulement des premières ouvertures de sorte à mettre à nu les pistes électriques du premier niveau,

- remplir les ouvertures de vias avec un matériau électriquement conducteur de sorte à former des vias au droit seulement des premières ouvertures du masque,
- réaliser le deuxième niveau des pistes électriques sur les vias.

Ainsi, le procédé proposé permet de dégrader volontairement, mais aléatoirement d'une puce à l'autre, le niveau d'interconnexions métalliques de type vias en introduisant une étape supplémentaire de structuration. Cette étape supplémentaire permet d'empêcher la création de vias à certains emplacements du masque dur destinés à former ces vias. Ainsi, le procédé proposé permet de désactiver certains vias de manière individualisée sur chaque puce d'une même plaque.

Par conséquent, il est possible de rendre unique le diagramme de réponse du circuit intégré de chaque puce d'une plaque. Cette réponse sera par conséquent unique, formant alors pour le circuit intégré une zone d'individualisation. Par ailleurs, le diagramme de réponse du circuit intégré sera stable dans le temps contrairement aux solutions décrites ci-dessus dans la section relative à l'état de la technique.

La zone d'individualisation est difficilement, voire n'est pas clonable physiquement. Elle peut être qualifiée par l'acronyme PUF (du vocable anglais Physically Unclonable Function). Il est donc possible de rendre unique le circuit intégré comportant cette zone d'individualisation.

Le procédé selon l'invention propose ainsi une solution fiable, que l'on peut aisément mettre en œuvre et à un coût réduit, afin de réaliser une zone d'individualisation d'un circuit intégré.

On notera également que ce procédé permet d'individualiser chaque puce d'une même plaque et chaque puce d'une plaque à une autre plaque, ceci avec le même jeu de masques utilisés pour les étapes de lithographie des motifs. L'invention permet alors de conserver un coût limité tout en offrant une forte capacité d'individualisation. Ainsi, le procédé proposé permet, de manière parfaitement contre-intuitive, de tirer profit des écarts d'alignement de motifs entre puces d'une même plaque ou entre deux plaques réalisées à partir des mêmes masques.

Un autre aspect qui ne fera partie de l'invention que s'il comprend toutes les caractéristiques de la revendication 1 concerne un procédé de réalisation d'un dispositif microélectronique comportant au moins un circuit intégré, le circuit intégré comportant au moins:

- un premier et un deuxième niveaux des pistes électriques,
- un niveau d'interconnexions situées entre les premiers et deuxième niveaux des pistes électriques et comportant des via destinés à connecter électriquement des pistes du premier niveau avec des pistes du deuxième niveau
- une zone d'individualisation du circuit intégré.

La zone d'individualisation est réalisée en mettant en œuvre le procédé décrit précédemment, de préférence sur une partie seulement du circuit intégré.

Par dispositif microélectronique, on entend tout type de dispositif réalisé avec des moyens de la microélectronique. Ces dispositifs englobent notamment en plus des dispositifs à finalité purement électronique, des dispositifs micromécaniques ou électromécaniques (MEMS, NEMS...) ainsi que des dispositifs optiques ou optoélectroniques (MOEMS...). Il peut s'agir d'un dispositif destiné à assurer une fonction électronique, optique, mécanique etc. Il peut aussi s'agir d'un produit intermédiaire uniquement destiné à la réalisation d'un autre dispositif microélectronique.

**BREVE DESCRIPTION DES FIGURES**

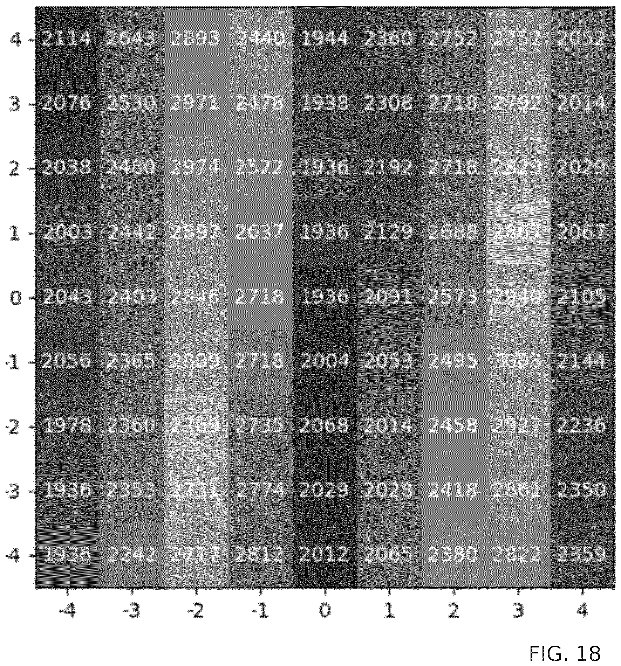

Les buts, objets, ainsi que les caractéristiques et avantages de l'invention ressortiront mieux de la description détaillée d'un mode de réalisation de cette dernière qui est illustré par les dessins d'accompagnement suivants dans lesquels les figures 18 à 22 montrent un objet illustratif qui ne fait pas partie de l'invention.

La figure 1 représente, de manière schématique et en vue du dessus, une plaque comprenant une pluralité de puces, chaque puce comprenant une zone fonctionnelle et une zone d'individualisation.

La figure 2 représente, de manière schématique et en perspective, un circuit intégré comprenant un premier et un deuxième niveaux des pistes électriques, ainsi qu'un niveau d'interconnexions comprenant des vias. Les vias connectent électriquement des pistes électriques du premier niveau avec des pistes électriques du deuxième niveau.

La figure 3 représente, de manière schématique et en vue du dessus, une zone d'individualisation et une zone fonctionnelle d'un circuit intégré obtenu en mettant en œuvre le procédé selon l'invention.

La figure 4 représente, de manière schématique et en vue du dessus, une étape intermédiaire du procédé selon l'invention permettant d'obtenir le circuit intégré illustré en figure 3.

La figure 5 est une vue du dessus d'une plaque comprenant une pluralité de puces intégrant chacune une zone d'individualisation. Sur cette figure, un seul motif utilisé pour mettre en œuvre la présente invention est illustrée.

La figure 6 montre la plaque de la figure 5 et illustre les motifs s'étendant sur toute la plaque.

Les figures 7 à 17 illustrent des étapes d'un exemple non limitatif de mise en œuvre d'un procédé selon l'invention. La figure 18 représente sous forme d'un tableau le nombre de via désactivés pour chacune des puces d'une plaque. Les figures 19A à 19D sont des graphes illustrant le nombre de puces présentant un nombre identique de via désactivés pour un lot de dix plaques.

Les figures 20 à 22 illustrent des exemples de réalisation dans lesquels on utilise des paramètres de correction de positionnement et/ou de déformation pour former les motifs afin d'accroître les différences d'agencement des via portés par les puces d'une plaque.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier, sur les schémas de principe, les épaisseurs des différentes couches, vias et motifs ne sont pas représentatives de la réalité.

## DESCRIPTION DÉTAILLÉE

Avant d'entamer une revue détaillée de modes de réalisation de l'invention, sont énoncées ci-après des exemples. Les exemples qui ne rentrent pas dans les définitions données dans les revendications ne font pas partie de l'invention.

Selon un exemple, l'agencement des motifs diffère d'une puce à l'autre de la pluralité de puces par au moins l'un des paramètres suivants:

- position des motifs sur la puce,
- dimensions des motifs,
- pas des motifs.

Selon un exemple, l'agencement des motifs est différent pour chacune des puces de la pluralité de puces de la plaque. Ainsi, aucune plaque ne comporte des via désactivés qui présentent tous les mêmes coordonnés d'une plaque à l'autre.

Selon un exemple, les motifs sont à base de résine.

Selon un exemple, les pistes du premier niveau s'étendent selon des lignes parallèles, les pistes du deuxième niveau s'étendent selon des lignes parallèles perpendiculaires aux pistes du premier niveau, les motifs s'étendant selon des lignes parallèles entre elles et inclinées par rapport aux pistes du premier et du deuxième niveau.

Selon un exemple, les motifs forment au moins une courbe et de préférence plusieurs courbes sur la plaque.

Selon un exemple, les motifs forment une ou plusieurs spirales sur la plaque. La spirale peut présenter un centre coïncidant avec le centre de la plaque. Selon un exemple, la distance entre les spires de la spirale n'est pas constante. Selon un exemple, le rayon de la spirale en un point n'est pas proportionnel à l'angle parcouru sur la spirale pour atteindre ce point.

Selon un exemple, les motifs forment un réseau en deux dimensions.

Selon un exemple, les motifs forment un réseau non périodique.

Selon un exemple, le pas entre deux motifs adjacents varie au sein d'une même puce. Selon un exemple, le pas entre deux motifs adjacents varie au sein d'une même plaque.

Selon un exemple, on détermine de manière aléatoire un nombre r, le pas entre deux motifs adjacents d'une même plaque variant en fonction du nombre r.

Selon un exemple, l'étape de réalisation des motifs est effectuée à l'aide d'un équipement de lithographie. Lors de l'étape de réalisation des motifs, on applique à cet équipement des corrections de déformation et/ de positionnement afin de faire varier la position et/ou les dimensions des motifs au sein d'une puce et/ou au sein d'une plaque. Ainsi la position et/ou les dimensions des motifs ne sont pas uniformes au sein d'une puce et/ou au sein d'une plaque. On utilise ainsi les possibilités de réglages équipement, afin de renforcer le caractère unique de chacune des zones d'individualisation.

Selon un exemple, chaque puce présente au moins une autre zone, distincte de la zone d'individualisation, de préférence destinée à former une zone fonctionnelle pour chaque puce. Selon un exemple, le premier et le deuxième niveaux de pistes électriques ainsi que le niveau d'interconnexion s'étendant dans ladite au moins une autre zone. Selon un exemple, préalablement à la réalisation des motifs, on forme un masque de protection, de préférence un masque dur, sur la zone destinée à former la zone fonctionnelle, ce masque de protection ne couvrant pas la zone de la puce destinée à comprendre la zone d'individualisation. Ce masque de protection empêche ladite étape de réalisation des ouvertures de vias de la couche diélectrique.

Ce masque de protection est conservé lors de la réalisation des ouvertures dans la couche diélectrique au droit des premières ouvertures du masque dur. Cet exemple de réalisation, a pour avantage de protéger la zone fonctionnelle lors de l'étape de réalisation des motifs. En effet, lorsque ces motifs sont réalisés par dépôt de résine puis insolation, l'étape d'insolation peut endommager des parties du circuit de la zone fonctionnelle. L'ajout d'un masque de protection permet de remédier efficacement à ce problème.

Selon un exemple, on utilise un masque de lithographie pour réaliser les motifs sur une pluralité de puces d'une première plaque et on utilise ce même masque de lithographie pour réaliser des motifs sur une pluralité de puces d'une deuxième plaque différente de la première plaque.

Selon un exemple, on positionne le masque de lithographie, relativement à la première plaque, selon un premier positionnement afin de réaliser les motifs sur la première plaque, et on positionne le masque de lithographie, relativement à la deuxième plaque, selon un deuxième positionnement, différent du premier positionnement, afin de réaliser les motifs sur la deuxième plaque.

Selon un exemple, pour passer du premier positionnement au deuxième positionnement, on fait pivoter le masque autour d'un axe sensiblement perpendiculaire à un plan dans lequel s'étend principalement une face avant du masque dur. Ainsi, avec les mêmes équipements de lithographie, on obtient des puces présentant des zones d'individualisation uniques entre puces d'une même plaque et entre puces de deux plaques différentes.

Selon un exemple, la réalisation des motifs aléatoires est effectuée uniquement dans l'au moins une zone d'individualisation. Le circuit intégré présente au moins une autre zone, distincte de la zone d'individualisation, de préférence destinée à former une zone fonctionnelle pour le circuit intégré. Cette autre zone présente une surface plus grande que la surface de la zone d'individualisation. Le premier et le deuxième niveaux de pistes électriques ainsi que le niveau d'interconnexion s'étendent dans ladite au moins une autre zone.

Il est précisé que, dans le cadre de la présente invention, le terme via regroupe toutes les connexions électriques telles que les plots, lignes et structures conductrices qui s'étendent, de préférence perpendiculairement, entre deux couches, successives ou non, du circuit intégré, soit entre deux niveaux de pistes électriques. Chaque niveau des pistes électriques s'étend principalement dans un plan et peut comporter des structures micromécaniques fonctionnelles telles que des transistors par exemple. De préférence, les vias forment chacun un plot, de section sensiblement circulaire.

Dans le cadre de la présente invention, un via présente une dimension critique $CD_{via}$, par exemple un diamètre, prise selon une coupe parallèle aux différents niveaux des pistes électriques intégrées. De préférence, $CD_{via}$ est inférieure à 50 $\mu$m. De préférence $CD_{via}$ est comprise entre 10 nm et 50 $\mu$m. De préférence $CD_{via}$ est comprise entre 10 nm et 10 $\mu$m.

Il est précisé que, dans le cadre de la présente invention, les termes « sur », « surmonte », « recouvre », « sous-jacent », en « vis-à-vis » et leurs équivalents ne signifient pas forcément « au contact de ». Ainsi par exemple, le dépôt, le report, le collage, l'assemblage ou l'application d'une première couche sur une deuxième couche, ne signifie pas obligatoirement que les deux couches sont directement au contact l'une de l'autre, mais signifie que la première couche recouvre au moins partiellement la deuxième couche en étant soit directement à son contact, soit en étant séparée d'elle par au moins une autre couche ou au moins un autre élément.

Une couche peut par ailleurs être composée de plusieurs sous-couches d'un même matériau ou de matériaux différents.

On entend par un substrat, un film, une couche, « à base » d'un matériau A, un substrat, un film, une couche comprenant ce matériau A uniquement ou ce matériau A et éventuellement d'autres matériaux, par exemple des éléments dopants.

Plusieurs modes de réalisation de l'invention mettant en œuvre des étapes successives du procédé de fabrication sont décrits ci-après. Sauf mention explicite, l'adjectif « successif » n'implique pas nécessairement, même si cela est généralement préféré, que les étapes se suivent immédiatement, des étapes intermédiaires pouvant les séparer.

Par ailleurs, le terme « étape » s'entend de la réalisation d'une partie du procédé, et peut désigner un ensemble de sous-étapes.

Par ailleurs, le terme « étape » ne signifie pas obligatoirement que les actions menées durant une étape soient simultanées ou immédiatement successives. Certaines actions d'une première étape peuvent notamment être suivies d'actions liées à une étape différente, et d'autres actions de la première étape peuvent être reprises ensuite. Ainsi, le terme étape ne s'entend pas forcément d'actions unitaires et inséparables dans le temps et dans l'enchaînement des phases du procédé.

Le mot « diélectrique » qualifie un matériau dont la conductivité électrique est suffisamment faible dans l'application donnée pour servir d'isolant. Dans la présente invention, un matériau diélectrique présente de préférence une constante diélectrique inférieure à 7.

On entend par « gravure sélective vis-à-vis de » ou « gravure présentant une sélectivité vis-à-vis de » une gravure configurée pour enlever un matériau A ou une couche A vis-à-vis d'un matériau B ou d'une couche B, et présentant une vitesse de gravure du matériau A supérieure à la vitesse de gravure du matériau B. La sélectivité est le rapport entre la vitesse de gravure du matériau A sur la vitesse de gravure du matériau B.

Dans le cadre de la présente invention, on qualifie de résine un matériau organique ou organo-minéral pouvant être mis en forme par une exposition à un faisceau d'électrons, de photons ou de rayons X ou mécaniquement.

On peut citer à titre d'exemple des résines classiquement employées en microélectronique, des résines à base de polystyrène (PS), de méthacrylate (par exemple le Polymethyl methacrylate PMMA), d'Hydrosilsesquioxane (HSQ), de polyhydroxystyrène (PHS) etc. L'intérêt d'utiliser une résine est qu'il est facile d'en déposer une épaisseur importante, de plusieurs centaines de nanomètres à plusieurs microns.

Il est précisé que dans le cadre de la présente invention, l'épaisseur d'une couche ou du substrat se mesure selon une direction perpendiculaire à la surface selon laquelle cette couche ou ce substrat présente son extension maximale. L'épaisseur est prise selon une direction perpendiculaire aux faces principales du substrat sur lequel reposent les différentes couches. Sur les figures, l'épaisseur est prise selon la verticale.

Un élément situé « à l'aplomb » ou « au droit d'» un autre élément signifie que ces deux éléments sont situés tous deux sur une même ligne perpendiculaire à un plan dans lequel s'étend principalement une face inférieure ou supérieure d'un substrat, c'est-à-dire sur une même ligne orientée verticalement sur les figures.

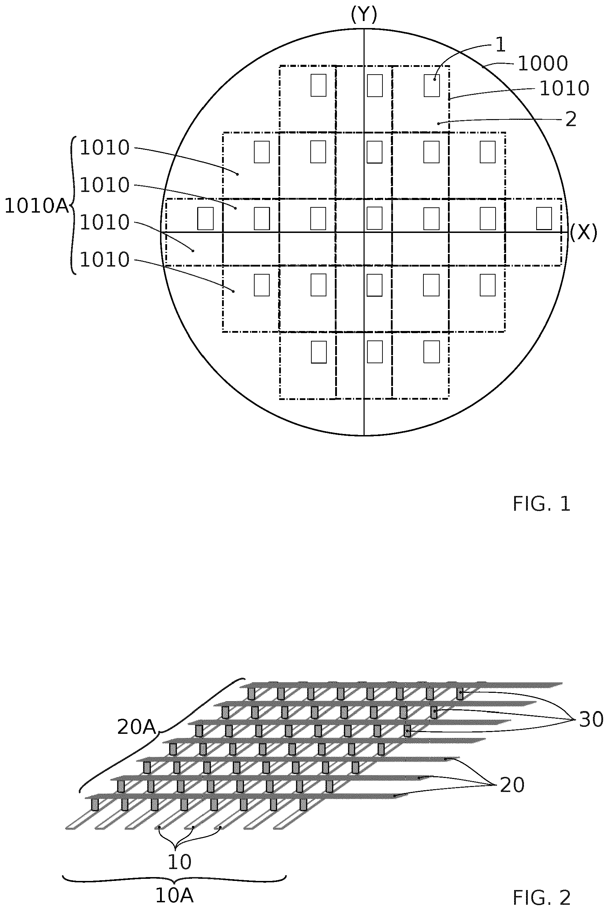

La figure 1 représente une plaque 1000 sur laquelle est réalisée une pluralité 1010A de puces 1010. Cette plaque est habituellement qualifiée par son vocable anglais wafer. Chaque puce 1010 comprend au moins un circuit intégré. Une partie du circuit intégré de la puce 1010 forme au moins une zone fonctionnelle 2 et une autre partie du circuit intégré forme au moins une zone d'individualisation 1.

De mère classique, le circuit intégré de la zone fonctionnelle 2 comprend des entrées et des sorties logiques. Cette zone fonctionnelle 2 est destinée à assurer des fonctions logiques pour le fonctionnement attendu du circuit intégré. Outre les pistes électriques 10, 20, cette zone fonctionnelle 2 peut éventuellement comprendre des structures micro-électroniques, telles que par exemple des transistors, des diodes, des MEMS etc.

La zone d'individualisation 1, a quant à elle pour fonction de rendre unique chaque circuit intégré c'est-à-dire chaque puce.

La figure 2 représente de manière schématique une portion d'un circuit intégré inclus dans une puce 1010 et comportant un premier niveau 10A des pistes électriques 10, et un deuxième niveau 20A des pistes électriques 20. Chacun de ces niveaux 10A, 20A s'étend principalement dans un plan. Ces plans sont sensiblement parallèles entre eux et à un substrat, non illustré, sur lequel reposent ces premier 10A et deuxième 20A niveaux de pistes électriques 10, 20. Le circuit intégré comprend également un niveau d'interconnexions configuré pour connecter électriquement des pistes du premier niveau 10A avec des pistes du deuxième niveau 20A, éventuellement de manière redondante. Ce niveau d'interconnexions comprend des portions conductrices généralement qualifiées de vias 30. On notera que des vias 30 peuvent connecter des pistes de deux niveaux qui ne sont pas adjacents mais qui sont eux-mêmes séparés par un ou plusieurs autres niveaux.

Afin de réaliser la zone d'individualisation 1, et comme cela sera détaillé par la suite, lors du procédé de fabrication, on prévoit de dégrader aléatoirement le niveau d'interconnexions comprenant les vias 30 de telle sorte qu'il soit possible d'individualiser chaque puce 1010 d'une même plaque 1000. De préférence, cette individualisation des puces 1010 est obtenue avec le même jeu de masques utilisés pour les étapes de photolithographie.

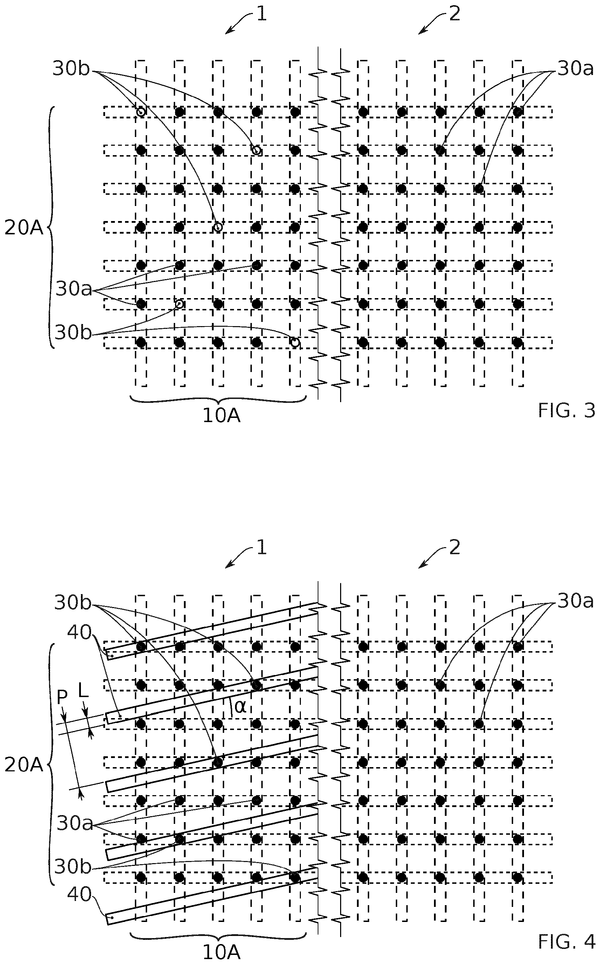

Chaque puce 1010 peut donc être identifiée de manière unique. La figure 3, illustre une puce 1010 comprenant une zone d'individualisation 1 et une zone fonctionnelle 2. Sur cette figure, on s'aperçoit que des vias 30a sont fonctionnels, c'est-à-dire qu'ils permettent une connexion électrique entre les deux niveaux 10A, 20A de pistes électriques, alors que d'autres vias 30b sont inactifs. Le principe est que l'on dispose pour chaque zone fonctionnelle 2 d'un réseau unique de vias fonctionnels 30a et de vias inactifs 30b.

Un challenge logique est appliqué aux entrées (pistes 10 du premier niveau 10A par exemple) puis l'on mesure l'état logique en sortie (pistes 20 du deuxième niveau 20A pour ce même exemple). Le réseau de vias 30a, 30b étant différent pour chaque puce 1010, la réponse de chaque puce est unique, permettant ainsi d'individualiser et d'identifier de manière unique les composants intégrant ces puces 1010. La zone d'individualisation 1 peut être qualifiée de zone PUF et la zone fonctionnelle 2 peut être qualifiée de zone non-PUF.

Selon un exemple de réalisation, le caractère unique de chaque réseau de vias fonctionnels 30a et inactifs 30b est obtenu en prévoyant une étape de structuration qui permet de désactiver certains vias afin de les rendre inactifs et non plus fonctionnels. À cette fin, et comme cela est illustré schématiquement en figure 4, après avoir réalisé le premier niveau 10A de pistes électriques 10, et après avoir défini l'emplacement des vias, on forme des motifs 40 de sorte que certains de ces motifs 40 viennent masquer l'emplacement des vias. Sur l'exemple illustré en figure 4, ces motifs forment un réseau de lignes décalées par rapport à la grille formée par les niveaux 10A et 20A de pistes électriques 10, 20. Dans cet exemple, ce décalage consiste en une inclinaison d'un angle a, référencée en figure 4.

Les vias dont l'emplacement est masqué par les motifs 40 ne permettront pas la formation d'une connexion électrique. Ces vias ne seront donc pas fonctionnels. Ils seront inactifs et définiront de manière unique la zone d'individualisation 1.

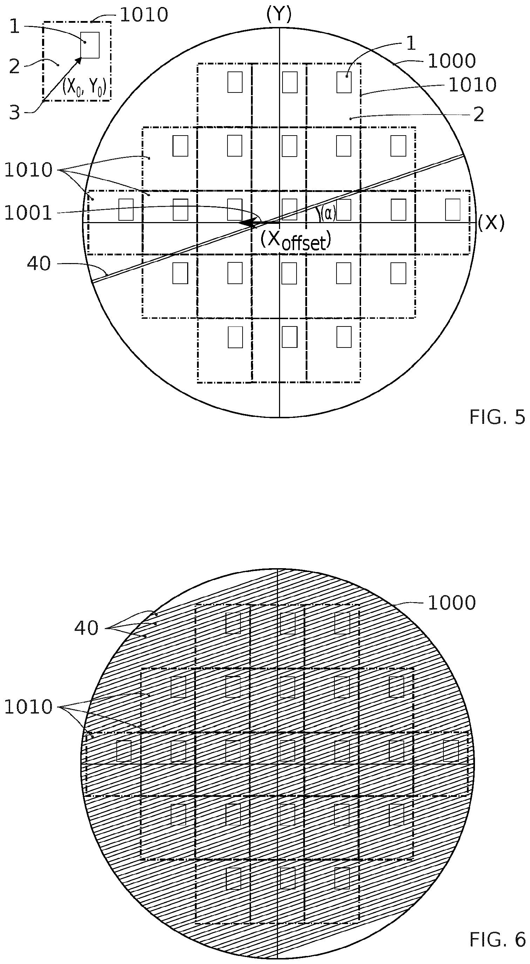

La figure 5 illustre cette approche à l'échelle de la plaque 1000. Cette plaque est identique à celle de la figure 1 à la différence près qu'un motif 40 est illustré. Par souci de clarté, un seul motif est illustré en figure 5. En revanche, en figure 6, un réseau complet de motifs 40 est illustré. Ce réseau recouvre de préférence l'intégralité de la plaque 1000.

Lors du procédé de fabrication, la plaque 1000 est virtuellement partitionnée en puces 1010. Dans chaque puce 1010, la position de la zone d'individualisation 1 est repérée par des coordonnées $X_0$, $Y_0$. Les valeurs $X_0 = 0$ et

$Y_0 = 0$ correspondent à l'origine 3 de la puce, par exemple le coin en bas gauche de cette dernière.

Les motifs 40 sont réalisés par l'une des techniques connues de lithographie, par exemple par lithographie optique, par lithographie électronique, ou par nano-impression. De préférence, ces motifs 40 sont des motifs faits d'une résine ou à base de résine.

Ce réseau de lignes parallèles, typiquement le centre de symétrie de ce réseau, est incliné d'un angle $\alpha$ par rapport aux axes (X, Y) de la plaque 1000. Par ailleurs, le centre de symétrie de ce réseau est de préférence décalé par rapport à l'origine de la plaque 1000. Ce décalage 1001 est noté $X_{offset}$ en figure 5. L'origine de la plaque 1000 correspond aux valeurs X = 0 et Y =0. En répartissant les motifs 40 sur l'intégralité de la plaque 1000, dans cet exemple avec une période P, on peut réaliser les zones d'individualisation 1 pour une pluralité 1010A de puces 1010 de la plaque 1000 et de préférence pour toute les puces 1010 de la plaque 1000. Ainsi, ces nombreuses zones d'individualisation 1 sont réalisées au cours des étapes communes.

De par l'agencement des motifs 40 sur la plaque 1000, i.e., dans ce cas de par l'inclinaison du réseau de lignes par rapport à l'organisation (réseau carré) des vias, le nombre de vias désactivés est différent entre chaque puce 1010 de la plaque 1000. Ainsi, chaque zone d'individualisation 1, et donc chaque puce 1010, est unique sur la plaque 1000. Comme nous le verrons par la suite, chaque puce 1010 est également unique pour un lot de plaques 1000.

Le caractère aléatoire des motifs provient d'au moins l'un des paramètres suivants :

- l'orientation des motifs 40 par rapport aux réseaux de pistes 10, 20 des premier 10A et deuxième 20A niveaux des pistes électriques.
- le pas des motifs 40. Ce pas P est référencé en figure 4. Ce pas P peut varier à l'échelle d'une puce 1010 et/ou à l'échelle de la plaque 1000 ;
- la forme des motifs. Dans l'exemple illustré en figures 4, 5 et 6, les motifs forment des lignes droites. Selon un autre exemple, les motifs peuvent former des lignes courbes. Les motifs peuvent former un réseau non périodique. Ainsi, la période séparant deux motifs varie à l'échelle d'une puce 1010 et/ou à l'échelle de la plaque 1000. Selon un autre exemple, les motifs peuvent former une ou plusieurs spirales. Par exemple le centre d'une spirale peut correspondre avec le centre de la plaque 1000. Alternativement, le centre de la spirale peut être décalé par rapport au centre de la plaque 1000. Les motifs peuvent également être des motifs ponctuels, identiques ou non, répartis sur l'ensemble de la plaque, de manière périodique ou non périodique.

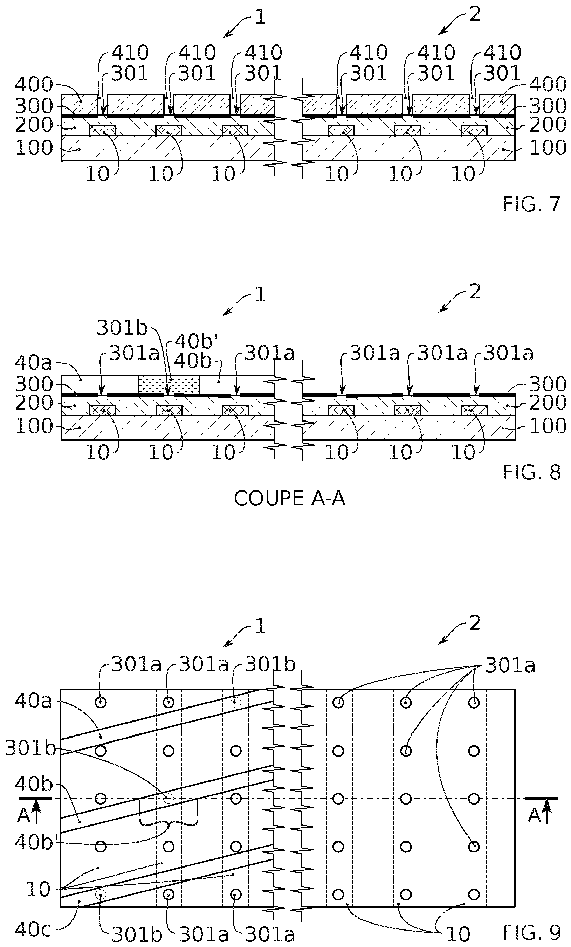

Un exemple non limitatif de réalisation d'un circuit intégré comportant une zone d'individualisation 1 et une zone fonctionnelle 2 va maintenant être décrit en détail en référence aux figures 7 à 17.

L'exemple décrit ci-dessous s'intègre dans la fabrication de composés semiconducteurs au niveau du back end, c'est-à-dire lors de réalisation des niveaux d'interconnections électriques.

La figure 7 illustre une étape où l'on fournit une plaque 1000 comprenant comportant une zone destinée à former une zone d'individualisation 1 et une zone destinée à former la zone fonctionnelle 2. La plaque 1000 est formée ou comprend un empilement comportant :

- une couche de support 100, faite d'un matériau diélectrique, par exemple un substrat diélectrique. Cette couche de support 100 est par exemple formée de $SiO_2$;
- le premier niveau 10A de pistes électriques 10. Ces pistes électriques 10 sont formées dans un matériau conducteur tel que le cuivre ;
- au moins une couche diélectrique 200 encapsulant le premier niveau 10A des pistes électriques 10. Cette couche diélectrique a également pour fonction de former une barrière contre la diffusion du cuivre. Cette couche diélectrique 200 est par exemple formée de $SiO_2$.

L'empilement peut également comprendre un masque 300 présentant des ouvertures 301 mettant à nu la couche diélectrique 200. De préférence, le masque 300 est un masque dur. Ce masque dur est par exemple formé d'un empilement de deux couches : une première couche disposée au contact ou au regard de la couche électrique 200 et une deuxième couche surmontant la première couche. On peut qualifier ce masque dur 300 de masque bicouche. Selon un exemple la première couche est un oxyde tel qu'un oxyde de silicium ($SiO_2$) et la deuxième couche est un nitrure tel que le nitrure de silicium (SiN). Selon un autre exemple, la première couche est un nitrure tel que le nitrure de silicium (SiN) et la deuxième couche est un oxyde tel qu'un oxyde de silicium ($SiO_2$).

Le masque 300 est surmonté d'un masque 400 présentant des ouvertures 410. Ce sont ces ouvertures 410 du masque 400 qui ont servi à ouvrir le masque dur 300. Ces ouvertures 301 dans les masques 300, 400 ont pour fonction de définir au cours d'une étape ultérieure, les vias 30 dans la couche diélectrique 200. Les ouvertures 410, 301 sont situées au droit des pistes électriques 10.

La nature du masque 400 dépend des techniques utilisées pour réaliser les ouvertures 410. La figure 7 illustre un masque 400 uniforme. Naturellement, ce masque 400, où la couche à partir de laquelle ce masque 400 est formé, peut être formée d'un empilement de couches. Par exemple, pour obtenir le masque 400, on peut déposer sur le masque dur 300, une couche comprenant deux couches de masque de gravure de type SOC (spin on carbon) et SiARC (silicon anti reflective coating signifiant revêtement anti réflexion à base de silicium), ainsi qu'une couche de résine photosensible. Les épaisseurs de ces trois couches varient selon la nature des produits employés ainsi que des dimensions des vias visés. Elles sont typiquement de l'ordre de 150 nm pour le SOC, 30 nm pour le SiARC et environ 100 nm pour la résine. Alternativement, le masque 400 peut être formé à partir d'un simple empilement de résine comprenant une couche de résine et un revêtement de type BARC (Bottom Anti Reflective Coating signifiant revêtement anti-réflexion de fond). De préférence, ces couches sont déposées par une méthode classique de spin coating (à la tournette ou par centrifugation).

Cet empilement, notamment le masque dur 300 et le masque de résine 400 sont réalisés en mettant en œuvre des techniques classiques de lithographie, telles que la lithographie optique, la lithographie électronique par faisceau d'électrons (ebeam), la lithographie par nano-impression ou toute autre technique de lithographie connue de l'homme du métier.

Par exemple, pour réaliser par lithographie optique les ouvertures 301 du masque dur 300, on peut insoler certaines zones du masque 400 de résine, puis, après développement, on obtient les ouvertures 410. Ces ouvertures 410 permettent ensuite de graver le masque dur 300 au droit des ouvertures 410.

On remarquera qu'à ce stade la zone d'individualisation 1 et la zone fonctionnelle 2 peuvent être parfaitement identiques.

On réalise ensuite un niveau additionnel de structuration sur la zone d'individualisation 1. Ce niveau additionnel de structuration consiste à former des motifs 40. La figure 9 est une vue du dessus illustrant cette étape. La figure 8 illustre cette étape en coupe selon la section AA référencée en figure 9.

Dans cet exemple, ces motifs 40 forment des lignes parallèles 40a, 40b, 40c. Ces lignes sont inclinées par rapport aux axes principaux selon lesquelles s'étendent les réseaux des pistes électriques 10, 20. Ces lignes 40a, 40b, 40c recouvrent certaines des ouvertures et laissent non masquées d'autres ouvertures. Les ouvertures non masquées sont référencées 301a. Elles rendent accessibles les portions de couche diélectrique 200 situées au droit des ouvertures 301. Les ouvertures masquées par les motifs 40 sont référencées 301b. La figure 8, fait apparaître une portion 40b', vue en coupe, de la ligne 40b. Cette figure 8 fait également apparaître un flanc de cette ligne 40b ainsi qu'un flanc de la ligne adjacente 40a. Cette ligne 40b masque l'ouverture 301b située au centre de la zone d'individualisation 1.

On remarquera que la zone fonctionnelle 2 n'est pas recouverte par les motifs 40. Pour parvenir à ce résultat, on peut naturellement prévoir de réaliser les motifs 40 sur l'intégralité de la plaque 1000 puis de retirer ces motifs uniquement dans les zones fonctionnelles 2 de chaque puce 1010. On peut également prévoir de protéger au préalable les zones fonctionnelles 2 avec une couche de résine. Cela permet de ne pas endommager les couches de l'empilement, en particulier les pistes électriques 10 lors d'un retrait des motifs 40.

Une autre solution peut consister à réaliser un masque dur additionnel, qui protège les zones fonctionnelles 2 lors de l'étape d'insolation. À cet effet, on prévoit de former, au-dessus du masque dur 300, un masque dur additionnel. Si le masque dur 300 est formé d'un empilement SiN/SiO$_2$, ce masque dur additionnel peut être formé de SiN. Cela permet d'effectuer une gravure sélective de ce masque dur additionnel par rapport à l'empilement sous-jacent du masque dur de SiN/SiO$_2$. Après formation de ce masque dur additionnel, on prévoit une étape de lithographie et une étape de gravure supplémentaires afin d'ouvrir le masque dur supplémentaire dans les zones d'individualisation 1. Ce masque dur supplémentaire est conservé dans les zones fonctionnelles 2. Il protège ainsi ces zones fonctionnelles 2 lors des étapes ultérieures, en particulier lors des étapes d'insolation.

Une autre solution consiste à réaliser les motifs 40 uniquement sur la ou les zones d'individualisation 1.

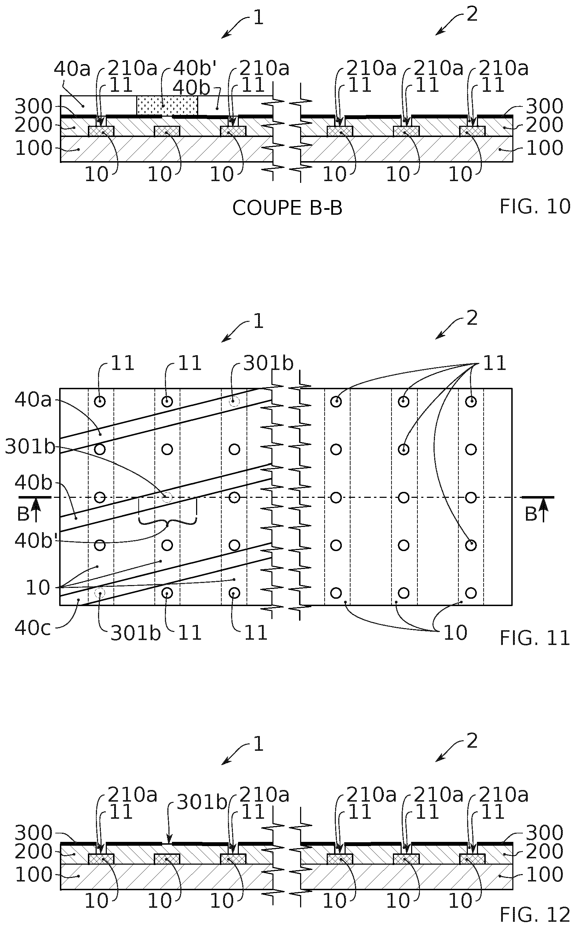

Comme illustré en figures 10 et 11, après réalisation des motifs 40, on ouvre la couche diélectrique 200 au droit des ouvertures 301a non masquées. Pour cela, on peut utiliser une solution de gravure sélective du matériau de la couche électrique 200 vis-à-vis du matériau formant le masque dur 300. Alternativement, on peut utiliser une gravure sèche, par plasma. Cette gravure de la couche électrique 200 forme des creux, désignés ouvertures de via 210a. En effet, ces ouvertures sont destinées à être remplies d'un matériau conducteur pour former des vias.

De préférence, la gravure est réalisée de sorte à déboucher sur les pistes électriques 10 du premier niveau 10A. Dans le fond de ces ouvertures, on rend ainsi accessible une portion 11 des pistes électriques 10. Ces portions 11 présentent, vue du dessus, une section correspondant aux vias que l'on souhaite réaliser.

La figure 11 illustre en contour plein ces vias débouchant sur les portions 11 des pistes électriques 10. Cette figure 11 illustre en pointillés les ouvertures 301b masquées par les motifs 40. Naturellement, dans la zone fonctionnelle 2, les pistes électriques 10 sont rendues accessibles au droit de chacune des ouvertures 210a du masque dur 300.

De préférence, l'ouverture du masque dur 300 formé par la couche électrique 200 est obtenue par une gravure par plasma.

Comme illustré en figure 12, les motifs 40 sont ensuite retirés, de préférence par une étape classique de stripping.

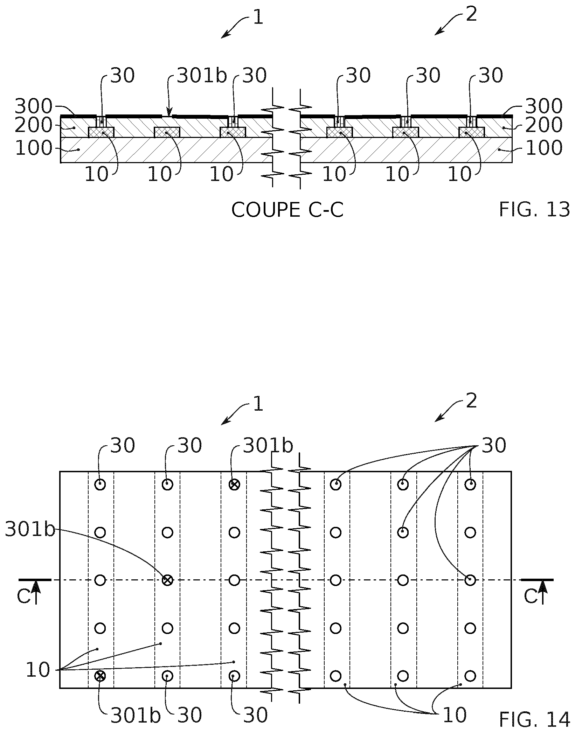

Comme illustré en figures 13 et 14, les ouvertures 210a débouchant sur les pistes électriques 10 sont alors remplies d'un matériau électriquement conducteur tel que le cuivre. De préférence, les ouvertures 210a sont entièrement remplies par le matériau conducteur. Si le remplissage excède la hauteur des ouvertures ou via, alors on peut prévoir une étape de planarisation, tel qu'une étape de CMP, pour retirer le matériau conducteur en excès. Des vias fonctionnels 30 sont ainsi formés.

Le matériau électriquement conducteur ne forme aucun via au droit des ouvertures 301b préalablement masqués par les motifs 40. Ces ouvertures 301b sont représentées par une croix en figure 14 pour refléter l'absence de connexion électrique verticale avec les pistes électriques 10.

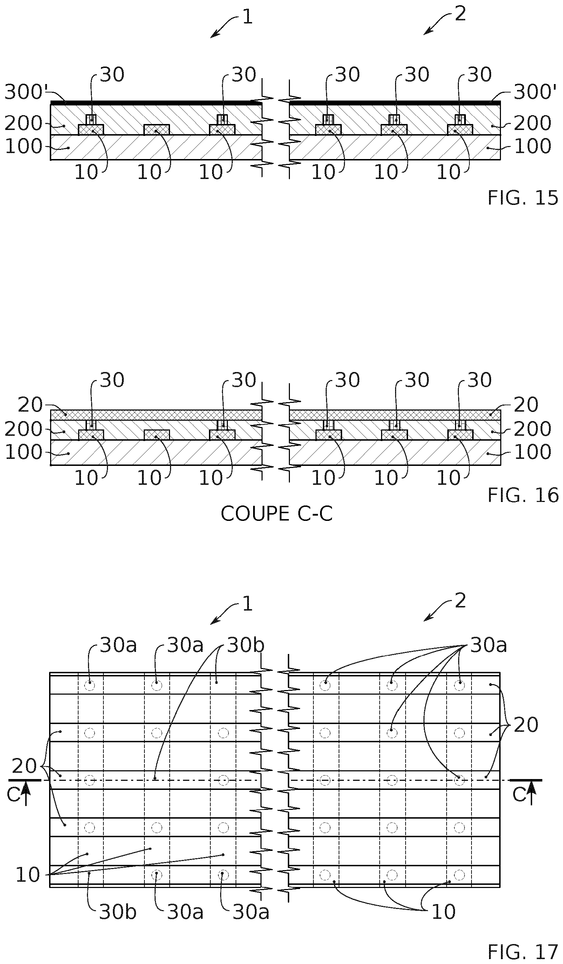

La figure 15 illustre le dépôt d'une couche additionnelle d'un diélectrique, par exemple une couche d'oxyde de silicium surmontée d'une couche 300' de nitrure de silicium. Cette couche diélectrique, possiblement formée de plusieurs couches, encapsule les connexions électriques 30.

Comme illustré en figure 16 et 17 on réalise ensuite les pistes électriques 20 du deuxième niveau 20A. Ces pistes électriques 20 sont au contact des connexions électriques 30.

Optionnellement, on effectue après dépôt de la couche d'oxyde et avant dépôt des pistes électriques 20 du deuxième niveau 20A, une étape de planarisation (CMP par exemple), de préférence sans rendre accessibles les connexions électriques 30, i.e., les sommets des via.

Comme illustré en figure 17, dans la zone d'individualisation 1, certains vias, référencés 30a, sont fonctionnels car ils connectent électriquement les pistes 10 du premier niveau 10A avec les pistes 20 du deuxième niveau 20A. D'autres vias, référencés 30b, sont inactifs car ils n'assurent aucune connexion entre les piste 10, 20 des premier 10A et deuxième 20A niveau. Dans la zone fonctionnelle 2, tous les via sont fonctionnels.

Dans le cas où des ouvertures 210a du masque dur 300 sont partiellement recouvertes par un motif 40, il se peut que la gravure de la couche électrique 200 soit uniquement partielle. Les ouvertures de vias 210a seront alors partiellement ouverts. Pour éviter que ces ouvertures de vias aient un rôle négatif sur la fiabilité dans le temps de la zone d'individualisation 2 et fassent varier la réponse de cette dernière au cours du temps, on peut prévoir un traitement pour supprimer ces vias. Par exemple, après remplissage par un matériau électriquement conducteur, on peut appliquer une tension supérieure à la tension de claquage. Cette étape n'est naturellement que optionnelle.

Exemple non limitatif de réalisation

Les paragraphes qui suivent décrivent un exemple particulier de réalisation d'un procédé Ilustratif pour une meilleure compréhension de l'invention. Cet exemple permet de montrer clairement le caractère unique de chacune des puces que l'on obtient en mettant en œuvre le procédé proposé.

Dans cet exemple, 10 plaques ont été fabriquées. Chaque plaque comprend 81 puces. Le tableau ci-dessous présente les conditions dans lesquelles cet exemple de réalisation a été effectué. Ce tableau indique notamment le diamètre de la plaque, ainsi que la taille des puces, la taille des zones d'individualisation, la période des via. Dans cet exemple, les motifs sont des lignes droites formant un réseau périodique. Le tableau indique la période de ce réseau, l'inclinaison des lignes droites ainsi que la largeur des lignes. Dans cet exemple, les via présentent une section circulaire dont le diamètre est indiqué dans le tableau.

Tableau 1

| Paramètre | Valeur |
|---|---|
| Taille du wafer (mm) | 200 |
| Taille des puces en X (mm) | 22 |
| Taille des puces en Y (mm) | 22 |
| $X_0$ (mm) | 14 |
| $Y_0$ (mm) | 18 |
| Taille zone à sécuriser en X ($\mu$m) | 50 |
| Taille zone à sécuriser en Y ($\mu$m) | 10 |
| Période des vias en X (nm) | 140 |
| Période des vias en Y (nm) | 140 |
| Période du réseau de ligne incline ($\mu$m) | 1 |
| $X_{offset}$ ($\mu$m) | -174 |
| $\alpha$ (°) | 0,027 |
| Diamètre du via (nm) | 70 |
| Largeur ligne (nm) | 100 |
| Nombre de wafers considérés | 10 |
| Nombre de puces par wafer | 81 |
| Incrément sur le $X_{offset}$ par plaque ($\mu$m) | 229.714 |

Tableau 2

| Paramètre | Valeur |
|---|---|
| Nombre de vias dans une zone à sécuriser | 25347 |
| Nombre total de puces fabriquées | 810 |

Pour chaque plaque, il est possible de calculer le nombre de vias masqués par les motifs et qui seront donc désactivés, c'est-à-dire non fonctionnels.

La figure 18 représente schématiquement l'agencement de 81 puces sur l'une des plaques fabriquées. Chaque carré de la matrice correspond ainsi à une puce. Pour chacune de ces puces, cette figure 18 indique le nombre de vias désactivés. Naturellement, en l'absence des motifs destinés à masquer certains vias, chacune de ces puces présenterait le même nombre de via fonctionnels dans la zone d'individualisation 1. Ce nombre de via fonctionnels correspondrait au nombre de via définis initialement dans le masque dur 300. Dans cet exemple, ce nombre de via est de 25347.

Du fait de la désorientation du réseau de lignes par rapport à l'organisation (réseau carré) de vias, on constate sur cette figure 18 que le nombre de via désactivés est différent d'une puce à l'autre.

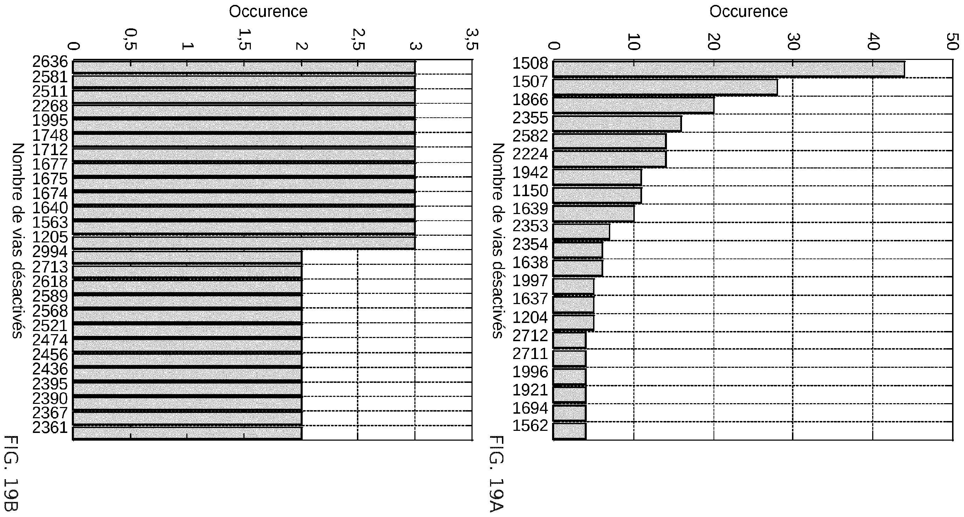

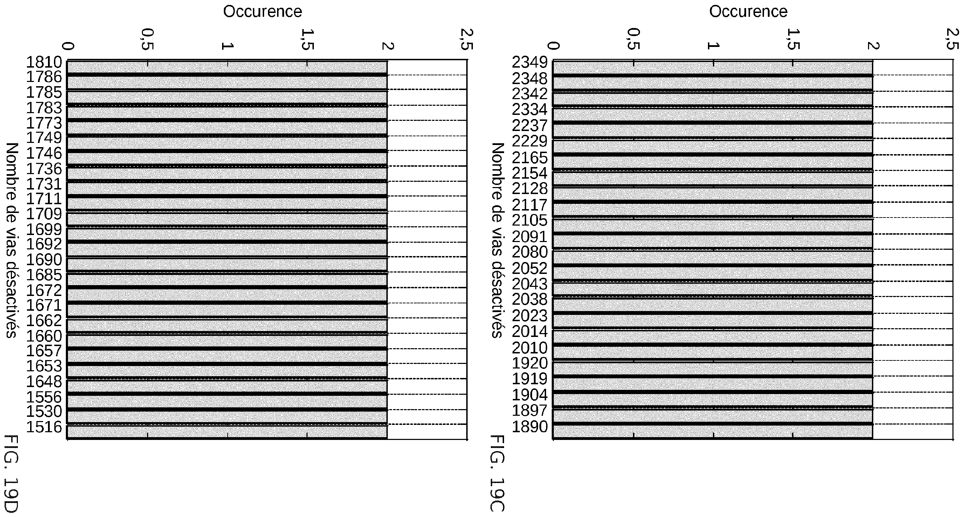

Les figures 19A à 19D sont des graphes illustrant les occurrences pour les puces ayant le même nombre de via désactivés, pour le jeu de dix plaques fabriquées.

Ainsi, comme cela ressort de la figure 19A, sur le lot de dix plaques, et donc sur un lot de 810 puces : 44 puces présentent un nombre de via désactivés égal à 1508 ; 20 puces présentent un nombre de via désactivés égal à 1866 ; 7 puces présentent un nombre de via désactivés égal à 2353 etc.

A ce stade, il pourrait se poser la question d'un éventuel risque que deux zones d'individualisation 1 soient identiques, c'est-à-dire que les vias désactivés de deux puces soit identiques en nombre et en coordonnées.

Il est possible, en utilisant un programme informatique, de comparer toutes les coordonnées de vias désactivés entre toutes les puces pour s'assurer qu'il n'y a aucune puce identique.

Par exemple dans le cas présent pour les puces présentant 2353 vias désactivés, il est possible de déterminer quelles sont ces puces qui ont ce nombre de via désactivés. Les puces sont référencées de la façon suivante : (numéro du wafer, numéro en X de la puce sur le wafer, numéro en Y de la puce sur le wafer). Les puces présentant 2353 vias désactivés sont les suivantes :

(1, 3, -3), (1, 3, -2), (1, 4, -1), (2, -3, -3), (2, -3, -2), (5, -4, -2), (6, -2, 3)

En utilisant le programme informatique de comparaison des coordonnées des via désactivés, on s'aperçoit qu'aucune de ces 7 puces ne présente une même organisation des via désactivés. Ainsi, les zones d'individualisation 1 de ces 7 puces donneront toute une réponse différente et permettront de reconnaître de manière unique chacune de ces puces.

En réitérant cette démarche sur les 810 puces, obtenues avec les paramètres du tableau ci-dessus, il s'avère qu'aucune des zones d'individualisation 1 de ces puces n'est identique.

Ainsi, le procédé proposé permet véritablement d'individualiser chacune de ces puces alors même qu'elles ont été obtenues en utilisant un même jeu de masques.

_Exemples de paramètres pour augmenter la capacité d'individualisation des puces_

Les paragraphes qui suivent visent à présenter des paramètres que l'on peut régler afin d'augmenter les capacités d'individualisation qu'offre le procédé selon l'invention.

_Variation du pas du réseau de motifs :_

En augmentant la période du réseau de lignes utilisé pour désactiver le réseau de vias on diminue le nombre de vias désactivés, ce qui permet de puce à puce de démultiplier les capacités d'individualisation.

Selon un mode de réalisation, on prévoit que le réseau de motifs, par exemple de lignes, ne soit pas périodique. Ainsi, la période entre deux motifs successifs, e.g. entre lignes successives, peut varier à la surface de la plaque, voire sur la surface d'une même zone d'individualisation 1.

De manière préférée, cette période varie de manière aléatoire. Elle peut varier en respectant une loi de variation préétablie, par exemple arithmétique, géométrique, polynomiale etc.

A titre d'exemple non limitatif, pour un réseau de lignes, la période aléatoire peut être conçue de la manière suivante. Soit P une période déterminée selon la mise en œuvre décrite précédemment pour répondre aux spécifications des besoins d'individualisation des puces. Cette valeur P peut aisément être déterminée à l'aide d'un logiciel de calcul permettant d'évaluer le nombre de via désactivés et leurs positions (coordonnées X et Y). Pour renforcer le caractère unique de l'agencement des via désactivés au sein de chaque zone d'individualisation 1, on peut alors réaliser un réseau de lignes inclinées dont le pas (P*) entre deux lignes successives ne sera pas constant. Ce pas correspond à la distance entre les flancs adjacents de deux motifs additionnés de la largeur de l'un de ces motifs. P* peut par exemple être déterminé par la relation suivante:

$$P* = P \times (1+ r)$$

Dans cette équation, r est un nombre aléatoire compris entre -c et +c. Par exemple c est compris dans l'intervalle entre [-0.2 et +0.2]. r est strictement supérieur à -1. r est nombre déterminé par un générateur aléatoire de nombres disponibles. c sera choisi de telle sorte que dans la configuration P* =P x (1-c), le réseau soit réalisable par la technique de lithographie identifiée pour réaliser ce réseau de lignes. Il faut en effet que la valeur P* soit compatible avec les capacités résolvantes en réseau dense pour le cas le plus critique à réaliser. Par ailleurs la plus faible valeur de P*, i.e. P* =P x (1-c), devra être strictement supérieure à la largeur de la ligne, ce qui impose une contrainte sur la valeur maximale de c.

Cet exemple avec variation du pas du réseau de motifs, s'applique quel que soit le motif retenu. Par exemple, peut en effet s'agir d'un motif en une dimension : lignes droites, ligne courbe, spirale(s). Dans ce dernier cas, on prévoit que la distance entre les spires de la spirale n'est pas constante. Le rayon de la spirale en un point n'est pas proportionnel à l'angle parcouru sur la spirale pour atteindre ce point.

Il peut également s'agir d'un motif en deux dimensions : motifs individuels répartis sur un réseau de dimensions, grille formée de lignes avec des intersections à angle droit ou non etc. Naturellement, dans le cas où les lignes forment une grille avec des intersections en angle droit, on veillera à ce que ces lignes sont inclinées par rapport aux lignes selon lesquels le réseau de via est aligné.

Utilisation de coefficients de correction de positionnement et/ou de déformation :

De manière alternative ou combinée avec le mode de réalisation précédent, il est également possible de modifier les paramètres de corrections de l'équipement de lithographie servant à réaliser les motifs de désactivation de via.

Les équipements de lithographie peuvent être réglés en prenant en compte des paramètres de correction de recouvrement, habituellement qualifiés de paramètres de correction d'overlay. Ces paramètres visent habituellement à corriger le positionnement ou la déformation de motifs que l'on souhaite réaliser afin d'obtenir des motifs qui soient les plus identiques possible au sein d'une même puce ou d'une puce à l'autre de la plaque.

Dans le cadre du procédé proposé, ces paramètres peuvent être utilisés pour modifier localement, entre les puces ou à l'intérieur d'une même puce, les paramètres du réseau de motifs, typiquement le réseau de lignes inclinées. Pour cela, lors de l'exposition de la résine pour définir les motifs dans cette dernière, on applique des coefficients de correction différents d'une puce à l'autre, dans le but de générer des motifs qui seront positionnés et/ou déformés de façon différente entre chaque puce.

Ainsi, au lieu d'utiliser les paramètres de correction de recouvrement afin d'obtenir des motifs identiques sur une plaque, ce mode de réalisation vise, de manière parfaitement inhabituelle, à dégrader volontairement les coefficients qui permettent de contrôler le recouvrement, avec pour but d'augmenter les différences de motifs au sein d'une même plaque.

Ces paramètres de correction sont décomposés en un model contenant des termes linéaires selon les axes X ou Y. En fonctions de l'amplitude et des coordonnées d'application de ces termes, on peut compenser ou générer au moins l'un parmi : de la translation en X et/ou en Y ; du grossissement selon X et/ou Y ; de la rotation selon l'axe Z perpendiculaire aux X et Y.

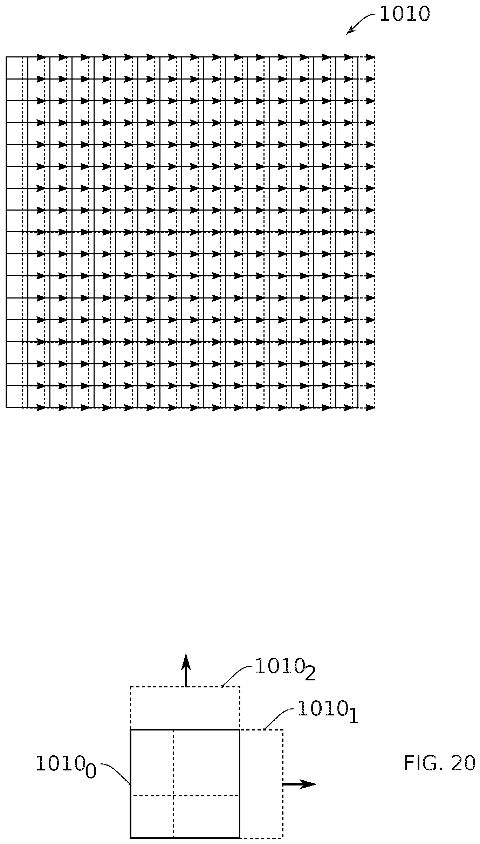

Les figures 20, 21 et 22 illustrent des exemples de modification de la position et/ou de la forme des motifs d'une puce, obtenues en jouant sur ces paramètres de correction. Sur ces exemples, on considérera que les contours déformés ou déplacés correspondent aux contours du réseau de motifs recouvrant l'ensemble de la puce. Naturellement, dans le cas où les motifs sont formés uniquement sur la zone d'individualisation, ces modifications ou déformation de contours ne concernent que la zone d'individualisation.

La figure 20 illustre des translations selon les axes X ou Y. La vue du dessus illustre l'impact de cette translation au sein d'une puce 1010. La vue du dessous illustre l'impact de cette translation au niveau de la puce 1010 au sein de la plaque. La référence $1010_0$ correspond à la position du contour de réseau de motifs de la puce en l'absence de paramètres de correction. La référence $1010_1$ correspond à la position du réseau de motifs après application de paramètres de correction en X. La référence $1010_2$ correspond à la position du réseau de motifs dans la puce après application de paramètres de correction en Y.

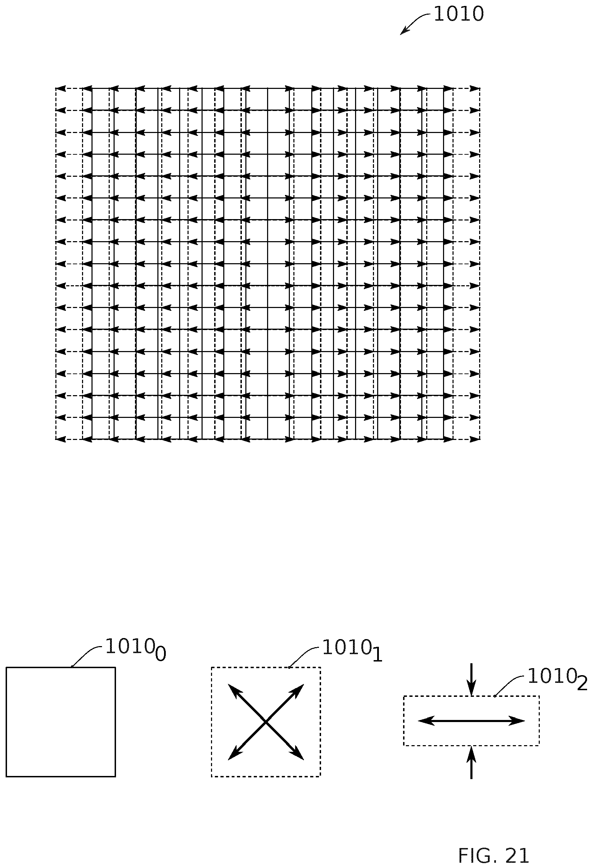

La figure 21 illustre des grossissements selon les axes X ou Y. La vue du dessus illustre l'impact de cette déformation au sein d'une puce 1010. On y voit que la maille initiale du réseau de motifs est déplacée dans les deux sens opposés, selon l'axe X, de part et d'autre du centre $(X_0, Y_0)$ de la puce 1010. La référence $1010_0$ correspond à la forme et aux dimensions du contour du réseau de motifs de la puce en l'absence d'application de paramètres de correction. La référence $1010_1$ correspond à une déformation opérée avec une même amplitude sur les axes X et Y. Un grossissement est alors appliqué à l'ensemble du réseau des motifs de la puce $1010_1$. La référence $1010_2$ correspond à une déformation opérée avec une amplitude positive (grossissement) selon l'axe X et avec une amplitude négative (rétrécissement) selon l'axe Y.

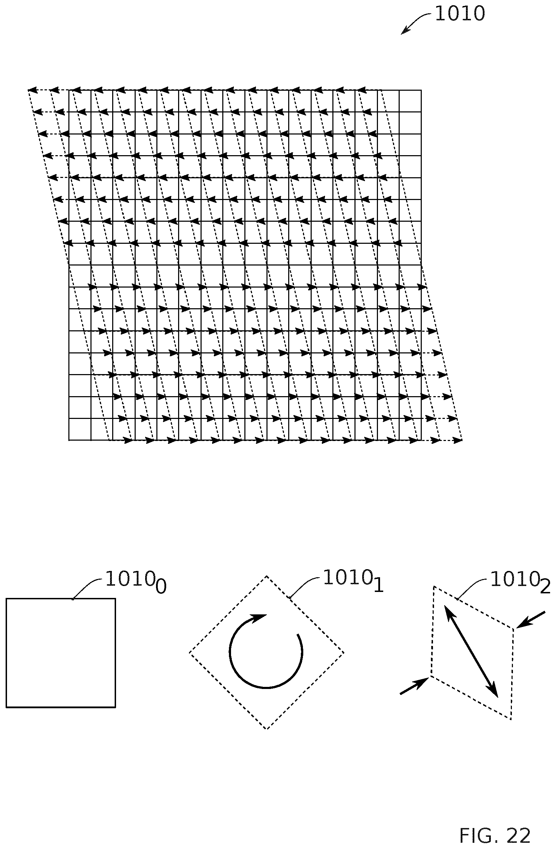

La figure 22 illustre une rotation du réseau de motifs effectué selon l'axe Z perpendiculaire aux axes X et Y. La vue du dessus illustre l'impact de cette rotation au sein d'une puce 1010. On y voit que la maille initiale du réseau de motifs est tournée dans le sens inverse de celui des aiguilles d'une montre et autour du centre $(X_0, Y_0)$ de la puce 1010. La référence $1010_0$ correspond à la forme et aux dimensions du réseau de motifs de la puce avant application de paramètres de correction. La référence $1010_1$ correspond à une rotation du réseau de motifs selon un sens antihoraire.

Naturellement, des comportements identiques peuvent être obtenus par modification des coefficients de positionnement et/ou de déformation sur l'axe Y.

Par ailleurs, il est possible de combiner des variations de position et des déformations selon les axes X et Y.

Par exemple, la référence $1010_2$ de la figure 22 correspond à une déformation du réseau de motifs obtenus par la combinaison d'une rotation autour de l'axe Z (rotation illustrée par la référence $1010_1$) et d'un rétrécissement selon l'axe Y.

On notera que des corrections avec des ordres plus élevés comme du 2ème ordre ou du 3ème peuvent être utilisés, selon l'axe X, selon l'axe Y ou selon une combinaison de ces axes. Pour cela il est nécessaire de se référer aux spécifications techniques de l'équipement utilisé.

Toutes ces combinaisons d'applications de coefficients de correction de positionnement et/ou de déformation des motifs à exposer dans la résine, habituellement utilisées pour compenser des désalignements, peuvent être alors mises en œuvre pour en générer des désalignements avec par objectifs de créer des motifs qui seront différents de puce à puce.

Au vu de la description qui précède, il apparaît clairement que le procédé proposé offre une solution particulièrement efficace pour réaliser une zone d'individualisation de type PUF.

L'invention s'étend à tous les modes de réalisation couverts par les revendications. Le mode de réalisation décrit ci-dessus s'intègre dans la fabrication de composés semi-conducteur au niveau du back end dit « cuivre ».

**Revendications**

1. Procédé de réalisation sur une plaque (1000) d'une pluralité de puces (1010) comprenant chacune un circuit intégré comprenant une zone d'individualisation (1), chaque puce (1010) étant destinée à comprendre au moins:

   • un premier (10A) et un deuxième (20A) niveaux des pistes électriques (10, 20),
   • un niveau d'interconnexions situées entre les premiers (10A) et deuxième (20A) niveaux des pistes électriques (10, 20) et comportant des vias (30) destinés à connecter électriquement des pistes électriques (10) du premier niveau (10A) avec des pistes électriques (20) du deuxième niveau (20A),

   le procédé comprenant au moins les étapes suivantes effectuées simultanément pour une pluralité (1010A) de puces (1010) de la plaque (1000):

   • fournir au moins le premier niveau (10A) des pistes électriques (10) et une couche diélectrique (200) recouvrant le premier niveau (10A),
   • réaliser sur la couche diélectrique (200) un masque dur (300) présentant des ouvertures (301) situées au droit des pistes électriques (10) et rendant accessible la couche diélectrique (200),
   • réaliser, dans une zone de la puce (1010) destinée à comprendre la zone d'individualisation (1), des motifs (40) conformés pour que :

      i. des premières ouvertures (301a) du masque dur (300) soient non masquées par les motifs (40) de sorte à laisser la couche diélectrique (200) accessible au droit des premières ouvertures (301a) et que
      ii. des deuxièmes ouvertures (301b) du masque dur (300) soient masquées par les motifs (40), l'agencement des motifs (40) étant différent pour chacune des puces (1010) de la pluralité (1010A) de puces (1010) de la plaque (1000),

   • réaliser des ouvertures de vias (210a) dans la couche diélectrique (200) au droit seulement des premières ouvertures (301a) de sorte à mettre à nu les pistes électriques (10) du premier niveau (10A),
   • remplir les ouvertures de vias (210a) avec un matériau électriquement conducteur de sorte à former des vias (30) au droit seulement des premières ouvertures (301a) du masque dur (300),
   • réaliser le deuxième niveau (20A) des pistes électriques (20) sur les vias (30).

2. Procédé selon la revendication précédente dans lequel l'agencement des motifs (40) diffère d'une puce (1010) à l'autre de la pluralité (1010A) de puces par au moins l'un des paramètres suivants:

   • position des motifs sur la puce,
   • dimensions des motifs,
   • pas des motifs.

3. Procédé selon l'une quelconque des revendications précédentes dans lequel les pistes (10) du premier niveau (10A) s'étendent selon des lignes parallèles, les pistes (20) du deuxième niveau (20A) s'étendent selon des lignes parallèles perpendiculaires aux pistes (10) du premier niveau (10A), les motifs (40) s'étendant selon des lignes parallèles entre elles et inclinées par rapport aux pistes (10, 20) du premier (10A) et du deuxième (20A) niveau.

4. Procédé selon l'une quelconque des revendications précédentes dans lequel les motifs (40) forment au moins une courbe et de préférence plusieurs courbes sur la plaque (1000), les motifs pouvant former une ou plusieurs spirales s'étendant sur la plaque.

5. Procédé selon l'une quelconque des revendications précédentes dans lequel les motifs (40) forment un réseau non périodique.

6. Procédé selon l'une quelconque des revendications précédentes dans lequel le pas entre deux motifs (40) adjacents varie au sein d'une même puce (1010).

7. Procédé selon l'une quelconque des revendications précédentes dans lequel le pas entre deux motifs (40) adjacents varie au sein d'une même plaque (1000).

8. Procédé selon l'une quelconque des revendications précédentes dans lequel on détermine de manière aléatoire un nombre r, le pas entre deux motifs (40) adjacents d'une même plaque (1000) variant en fonction du nombre r.

9. Procédé selon l'une quelconque des revendications précédentes dans lequel l'étape de réalisation des motifs (40) est effectuée à l'aide d'un équipement de lithographie, et dans lequel, lors de l'étape de réalisation des motifs (40), on applique à cet équipement des corrections de déformation et/ de positionnement afin de faire varier la position et/ou les dimensions des motifs au sein d'une puce (1010) et/ou au sein d'une plaque (1000).

10. Procédé selon l'une quelconque des revendications précédentes dans lequel chaque puce (1010) présente au moins une autre zone, distincte de la zone d'individualisation (1), de préférence destinée à former une zone fonctionnelle (2) pour chaque puce (1010).

11. Procédé selon la revendication précédente dans lequel le premier (10A) et le deuxième (20A) niveaux de pistes électriques (10, 20) ainsi que le niveau d'interconnexion s'étendant dans ladite au moins une autre zone.

12. Procédé selon la revendication précédente dans lequel préalablement à la réalisation des motifs (40), on forme un masque de protection, de préférence un masque dur, sur la zone destinée à former la zone fonctionnelle (2), ce masque de protection ne couvrant pas la zone de la puce (1010) destinée à comprendre la zone d'individualisation (1), ce masque de protection empêchant ladite étape de réalisation des ouvertures de vias (210a) de la couche diélectrique (200).

13. Procédé selon l'une quelconque des revendications précédentes dans lequel on utilise un masque de lithographie pour réaliser les motifs (40) sur une pluralité (1010A) de puces (1010) d'une première plaque (1000) et on utilise ce même masque de lithographie pour réaliser des motifs (40) sur une pluralité (1010A) de puces (1010) d'une deuxième plaque (1000) différente de la première plaque (1000).

14. Procédé selon la revendication précédente dans lequel, on positionne le masque de lithographie, relativement à la première plaque (1000), selon un premier positionnement afin de réaliser les motifs (40) sur la première plaque (1000), et on positionne le masque de lithographie, relativement à la deuxième plaque (1000), selon un deuxième positionnement, différent du premier positionnement, afin de réaliser les motifs (40) sur la deuxième plaque (1000).

15. Procédé selon la revendication précédente dans lequel, pour passer du premier positionnement au deuxième positionnement, on fait pivoter le masque autour d'un axe sensiblement perpendiculaire à un plan dans lequel s'étend principalement une face avant du masque dur (300).

**Patentansprüche**

1. Herstellungsverfahren einer Vielzahl von Chips (1010) auf einer Platte (1000), die jeweils einen integrierten Schaltkreis umfassen, eine Individualisierungszone (1) umfassend, wobei jeder Chip (1010) bestimmt ist, um mindestens zu umfassen:

   • ein erstes (10A) und eine zweites (20A) Niveau von elektrischen Bahnen (10, 20),
   • ein Niveau von Zusammenschaltungen zwischen dem ersten (10A) und dem zweiten (20A) Niveau von elektrischen Bahnen (10, 20) liegend und Vias (30) enthaltend, die zum elektrischen Verbinden der elektrischen Bahnen (10) des ersten Niveaus (10A) mit den elektrischen Bahnen (20) des zweiten Niveaus (20A) bestimmt sind,

   wobei das Verfahren mindestens die folgenden Schritte umfasst, die gleichzeitig für eine Vielzahl (1010A) von Chips (1010) der Platte (1000) durchgeführt werden:

   • Bereitstellen mindestens des ersten Niveaus (10A) von elektrischen Bahnen (10) und einer dielektrischen Schicht (200), die das erste Niveau (10A) bedeckt,

- Herstellen einer Hartmaske (300) auf der dielektrischen Schicht (200), Öffnungen (301) aufweisend, die rechtwinklig zu den elektrischen Bahnen (10) liegen und die dielektrische Schicht (200) zugänglich machen,
- Herstellen, in einer Zone des Chips (1010), die dazu bestimmt ist, die Individualisierungszone (1) zu umfassen, von Mustern (40), die angepasst sind, damit:

  i. erste Öffnungen (301a) der Hartmaske (300) nicht durch die Muster (40) verdeckt sind, so dass die dielektrische Schicht (200) rechtwinklig zu den ersten Öffnungen (301a) zugänglich bleibt und damit
  ii. zweite Öffnungen (301b) der Hartmaske (300) durch die Muster (40) verdeckt sind, wobei die Anordnung der Muster (40) unterschiedlich ist für jeden der Chips (1010) der Vielzahl (1010A) von Chips (1010) der Platte (1000),

- Herstellen von Via-Öffnungen (210a) in der dielektrischen Schicht (200) rechtwinklig zu lediglich den ersten Öffnungen (301a), so dass die elektrischen Bahnen (10) des ersten Niveaus (10A) freigelegt werden,
- Füllen der Via-Öffnungen (210a) mit einem elektrisch leitfähigen Material, so dass Vias (30) rechtwinklig zu lediglich den ersten Öffnungen (301a) der Hartmaske (300) gebildet werden,
- Herstellen des zweiten Niveaus (20A) von elektrischen Bahnen (20) auf den Vias (30).

2. Verfahren nach dem vorhergehenden Anspruch, wobei sich die Anordnung der Muster (40) von einem Chip (1010) zum anderen der Vielzahl (1010A) von Chips durch mindestens einen der folgenden Parameter unterscheidet:

  µ Position der Muster auf dem Chip,
  µ Abmessungen der Muster,
  µ Raster der Muster.

3. Verfahren nach einem der vorhergehenden Ansprüche, wobei sich die Bahnen (10) des ersten Niveaus (10A) in parallelen Linien erstrecken, sich die Bahnen (20) des zweiten Niveaus (20A) in parallelen Linien senkrecht zu den Bahnen (10) des ersten Niveaus (10A) erstrecken und sich die Muster (40) in parallelen Linien zueinander und geneigt bezüglich der Bahnen (10, 20) des ersten (10A) und des zweiten (20A) Niveaus erstrecken.

4. Verfahren nach einem der vorhergehenden Ansprüche, wobei die Muster (40) mindestens eine Kurve und vorzugsweise mehrere Kurven auf der Platte (1000) bilden, wobei die Muster eine oder mehrere Spiralen bilden können, die sich auf der Platte erstrecken.

5. Verfahren nach einem der vorhergehenden Ansprüche, wobei die Muster (40) ein nicht-periodisches Netz bilden.

6. Verfahren nach einem der vorhergehenden Ansprüche, wobei der Raster zwischen zwei benachbarten Mustern (40) innerhalb desselben Chips (1010) variiert.

7. Verfahren nach einem der vorhergehenden Ansprüche, wobei der Raster zwischen zwei benachbarten Mustern (40) innerhalb derselben Platte (1000) variiert.

8. Verfahren nach einem der vorhergehenden Ansprüche, wobei eine Anzahl r zufällig bestimmt wird, wobei der Raster zwischen zwei benachbarten Mustern (40) derselben Platte (1000) in Abhängigkeit von der Anzahl r variiert.

9. Verfahren nach einem der vorhergehenden Ansprüche, wobei der Herstellungsschritt der Muster (40) unter Verwendung einer Lithographieausrüstung durchgeführt wird, und wobei während dem Herstellungsschritt der Muster (40) auf diese Ausrüstung Verformungs- und/oder Positionierungskorrekturen angewendet werden, um die Position und/oder die Abmessungen der Muster innerhalb eines Chips (1010) und/oder innerhalb einer Platte (1000) zu variieren.

10. Verfahren nach einem der vorhergehenden Ansprüche, wobei jeder Chip (1010) mindestens eine weitere Zone aufweist, die sich von der Individualisierungszone (1) abgrenzt, vorzugsweise zur Bildung einer Funktionszone (2) für jeden Chip (1010).

11. Verfahren nach dem vorhergehenden Anspruch, wobei sich das erste (10A) und das zweite (20A) Niveau von elektrischen Bahnen (10, 20) sowie das Zusammenschaltungsniveau in der mindestens einen weiteren Zone erstrecken.

**12.** Verfahren nach dem vorhergehenden Anspruch, wobei vor der Herstellung der Muster (40) eine Schutzmaske gebildet wird, vorzugsweise eine Hartmaske, auf der Zone, die zur Bildung der Funktionszone (2) bestimmt ist, wobei diese Schutzmaske nicht die Zone des Chips (1010) abdeckt, die dazu bestimmt ist, die Individualisierungszone (1) zu umfassen, und wobei diese Schutzmaske den Herstellungsschritt der Via-Öffnungen (210a) der dielektrischen Schicht (200) verhindert.

**13.** Verfahren nach einem der vorhergehenden Ansprüche, wobei eine Lithographiemaske verwendet wird, um die Muster (40) auf einer Vielzahl (1010A) von Chips (1010) einer ersten Platte (1000) herzustellen, und dieselbe Lithographiemaske verwendet wird, um Muster (40) auf einer Vielzahl (1010A) von Chips (1010) einer zweiten Platte (1000) herzustellen, die sich von der ersten Platte (1000) unterscheidet.

**14.** Verfahren nach dem vorhergehenden Anspruch, wobei die Lithographiemaske relativ zur ersten Platte (1000) gemäß einer ersten Positionierung positioniert wird, um die Muster (40) auf der ersten Platte (1000) herzustellen, und die Lithographiemaske relativ zur zweiten Platte (1000) gemäß einer zweiten Positionierung positioniert wird, die sich von der ersten Positionierung unterscheidet, um die Muster (40) auf der zweiten Platte (1000) herzustellen.

**15.** Verfahren nach dem vorhergehenden Anspruch, wobei, um von der ersten Positionierung zur zweiten Positionierung zu gelangen, die Maske um eine Achse gedreht wird, die im Wesentlichen senkrecht zu einer Ebene ist, in der sich hauptsächlich eine Vorderseite der Hartmaske (300) erstreckt.

**Claims**

**1.** A method for making on a plate (1000) a plurality of chips (1010) each comprising an integrated circuit comprising an individualisation area (1), each chip (1010) being intended to comprise at least:

   • a first (10A) and a second (20A) levels of the electrical tracks (10, 20),
   • a level of interconnections located between the first (10A) and second (20A) levels of the electrical tracks (10, 20) and including vias (30) intended to electrically connect electrical tracks (10) of the first level (10A) with electrical tracks (20) of the second level (20A),

the method comprising at least the following steps performed simultaneously for a plurality (1010A) of chips (1010) of the plate (1000):

   • provide at least the first level (10A) of the electrical tracks (10) and a dielectric layer (200) covering the first level (10A),
   • make over the dielectric layer (200) a hard mask (300) having openings (301) located in line with the electrical tracks (10) and making the dielectric layer (200) accessible,
   • make, in an area of the chip (1010) intended to comprise the individualisation area (1), patterns (40) shaped so that:

      i. first openings (301a) of the hard mask (300) are not masked by the patterns (40) so as to leave the dielectric layer (200) accessible in line with the first openings (301a) and that
      ii. second openings (301b) of the hard mask (300) are masked by the patterns (40), the arrangement of the patterns (40) being different for each of the chips (1010) of the plurality (1010A) of chips (1010) of the plate (1000),

   • make via openings (210a) in the dielectric layer (200) in line only with the first openings (301a) so as to expose the electrical tracks (10) of the first level (10A),
   • fill the via openings (210a) with an electrically-conductive material so as to form vias (30) in line only with the first openings (301a) of the hard mask (300),
   • make the second level (20A) of the electrical tracks (20) over the vias (30).

**2.** The method according to the preceding claim, wherein the arrangement of the patterns (40) differs from one chip (1010) to another of the plurality (1010A) of chips by at least one of the following parameters:

   • position of the patterns on the chip,
   • dimensions of the patterns,

• pitch of the patterns.

3. The method according to any one of the preceding claims, wherein the tracks (10) of the first level (10A) extend according to parallel lines, the tracks (20) of the second level (20A) extend according to parallel lines perpendicular to the tracks (10) of the first level (10A), the patterns (40) extending according to lines parallel to each other and inclined with respect to the tracks (10, 20) of the first (10A) and of the second (20A) level.

4. The method according to any one of the preceding claims, wherein the patterns (40) form at least one curve and preferably several curves on the plate (1000), the patterns being able to form one or more spirals extending over the plate.

5. The method according to any one of the preceding claims, wherein the patterns (40) form a non-periodic array.

6. The method according to any one of the preceding claims, wherein the pitch between two adjacent patterns (40) varies within the same chip (1010).

7. The method according to any one of the preceding claims, wherein the pitch between two adjacent patterns (40) varies within the same plate (1000).

8. The method according to any one of the preceding claims, wherein a number r is randomly determined, the pitch between two adjacent patterns (40) of the same plate (1000) varying as a function of the number r.

9. The method according to any one of the preceding claims, wherein the pattern making step (40) is performed using lithography equipment, and wherein, during the patterning step (40), deformation and/or positioning corrections are applied to this equipment in order to make the position and/or the dimensions of the patterns vary within a chip (1010) and/or within a plate (1000).

10. The method according to any one of the preceding claims, wherein each chip (1010) has at least one other area, distinct from the individualisation area (1), preferably intended to form a functional area (2) for each chip (1010).

11. The method according to the preceding claim, wherein the first (10A) and the second (20A) levels of electrical tracks (10, 20) as well as the interconnection level extending in said at least one other area.

12. The method according to the preceding claim, wherein prior to making of the patterns (40), a protective mask, preferably a hard mask, is formed over the area intended to form the functional area (2), this protective mask not covering the area of the chip (1010) intended to comprise the individualisation area (1), this protective mask preventing said step of making the via openings (210a) of the dielectric layer (200).

13. The method according to any one of the preceding claims, wherein a lithography mask is used to make the patterns (40) over a plurality (1010A) of chips (1010) of a first plate (1000) and this same lithography mask is used to make patterns (40) over a plurality (1010A) of chips (1010) of a second plate (1000) different from the first plate (1000).

14. The method according to the preceding claim, wherein the lithography mask is positioned, with respect to the first plate (1000), according to a first positioning in order to make the patterns (40) over the first plate (1000), and the lithography mask is positioned, with respect to the second plate (1000), according to a second positioning, different from the first positioning, in order to make the patterns (40) over the second plate (1000).

15. The method according to the preceding claim, wherein, to switch from the first positioning to the second positioning, the mask is pivoted about an axis substantially perpendicular to a plane in which a front face of the hard mask (300) mainly extends.

FIG. 1

FIG. 2

FIG. 3

FIG. 4

FIG. 5

FIG. 6

FIG. 7

FIG. 8

COUPE A-A

FIG. 9

COUPE B-B                                                    FIG. 10

FIG. 11

FIG. 12

COUPE C-C    FIG. 13

FIG. 14

FIG. 15

COUPE C-C

FIG. 16

FIG. 17

FIG. 18

FIG. 19A

FIG. 19B

FIG. 19C

FIG. 19D

FIG. 20

1010

1010₀ 1010₁ 1010₂

FIG. 21

FIG. 22

**EP 3 890 005 B1**

## RÉFÉRENCES CITÉES DANS LA DESCRIPTION

### Documents brevets cités dans la description

- EP 3418936 A